# EUROPÄISCHE PATENTSCHRIFT

(11) **EP 2 771 958 B1**
(45) Veröffentlichungstag und Bekanntmachung des Hinweises auf die Patenterteilung: **13.01.2016**
(21) Anmeldenummer: 12784526.1
(22) Anmeldetag: 23.10.2012
(51) Int. Cl.: H02M 7/42, G05F 1/67

(54) **NACHFÜHRVERFAHREN UND -EINRICHTUNG FÜR EINEN SPANNUNGSWANDLER FÜR EINE PHOTOVOLTAIKANLAGE**
TRACKING METHOD AND TRACKING DEVICE FOR A VOLTAGE TRANSFORMER FOR A PHOTOVOLTAIC SYSTEM
PROCÉDÉ ET DISPOSITIF DE POURSUITE DU SOLEIL POUR UN TRANSFORMATEUR DE TENSION D'INSTALLATION PHOTOVOLTAÏQUE

(30) Priorität: 28.10.2011 DE 102011054939
(43) Veröffentlichungstag der Anmeldung: 03.09.2014
(73) Patentinhaber: SMA Solar Technology AG, 34266 Niestetal (DE)
(72) Erfinder: BOCK, Martin, 34543 Edertal (DE); MÜLLER, Tobias, 34355 Escherode (DE); ORTMANN, Thomas, 34125 Kassel (DE); UNRU, Alexander, 34266 Niestetal (DE)
(86) Internationale Anmeldenummer: PCT/EP2012/070991
(87) Internationale Veröffentlichungsnummer: WO 2013/060692

(56) Entgegenhaltungen:
- US-A- 5 268 832
- US-A- 5 892 354

## Beschreibung

Die Erfindung betrifft ein Nachführverfahren für einen Spannungswandler, insbesondere einen Wechselrichter, einer Photovoltaikanlage, zur Nachführung eines Arbeitspunkt eines PV-Generators. bei dem eine Zwischenkreisspannung um einen Spannungsschritt einer vorgegebenen Höhe in eine Richtung zu kleinerer oder zu größerer Spannung hin verändert wird. Die Erfindung betrifft weiterhin eine Nachführeinrichtung und einen Wechselrichter mit einer Nachführeinrichtung.

Wechselrichter dienen in Photovoltaikanlagen der Umwandlung eines von einem Photovoltaikgenerator erzeugten Gleichstroms in Wechselstrom, der einoder mehrphasig in ein öffentliches oder privates Stromversorgungsnetz eingespeist werden kann. Als Photovoltaikgenerator, im Folgendem abgekürzt als PV-Generator bezeichnet, ist im Rahmen der Anmeldung jede Anordnung aus Photovoltaikmodulen (PV-Module) zu verstehen, insbesondere eine Anordnung, bei der mehrere PV-Module in Serie zu einem sogenannten String verschaltet sind.

Wechselrichter oder allgemeiner Spannungswandler einer PV-Anlage weisen üblicherweise eine Nachführeinrichtung für den Arbeitspunkt des mit ihnen verbundenen PV-Generators auf, den sogenannten MPP (Maximum Power Point)-Tracker. Durch den MPP-Tracker wird der PV-Generatoren bei einem Arbeitspunkt betrieben, an dem die maximale elektrische Leistung abgegeben wird. Dieser optimale Arbeitspunkt, auch MPP-Arbeitspunkt genannt, ist abhängig von dem jeweiligen PV-Generator und dessen Betriebsparametern, beispielsweise der Intensität der Sonneneinstrahlung und der Temperatur des PV-Generators. Darüber hinaus verschiebt sich der Arbeitspunkt im Laufe der Lebenszeit von PV-Generatoren durch deren Alterungsverhalten (Degradation) zu niedrigeren Spannungen hin. Ein solcher Wechselrichter is aus US 5 268 832 A bekannt.

Eine Zusammenstellung verschiedener MPP-Nachführverfahren findet sich in dem Artikel "Comparison of the performance of maximum power point schemes applied to single-stage grid-connected photovoltaic svstems", S, Jain and V,Agarwal, IET Electr, Power App!., 2007. Bei einem häufig eingesetzten Nachführverfahren wird die Spannung am Eingang des Spannungswandlers, die insbesondere bei einstufigen Wechselrichtern, also solchen Wechselrichtern, die nur eine Wandlerstufe in Form einer Wechselrichterbrücke aufweisen, auch als Zwischenkreisspannung bezeichnet wird, schrittweise vergrößert oder verkleinert, wobei bei jedem Schritt eine damit verbundene Änderung der vom PV-Generator erzeugten und vom Wechselrichter umgesetzten Leistung ermittelt wird. Solange sich die Leistung vergrößert führt die Spannungsänderung in der Regel in Richtung des optimalen Arbeitspunktes. Entsprechend kann für einen nächsten Variationsschritt die Richtung der Spannungsänderung (Vergrößerung/Verkleinerung) beibehalten werden. Verringert sich dagegen die Leistung bei Variation der Zwischenkreisspannung, kann die Richtung des nachfolgenden Schrittes umgekehrt werden. Auf diese Weise folgt oder umschwankt die Zwischenkreisspannung die Spannung im optimalen Arbeitspunkt.

Eine Abwandlung eines derartigen Nachführverfahrens ist aus der Druckschrift US 2005/0110454 A1 bekannt. Dabei wird nicht die vom PV-Generator erzeugte, sondern die von dem Wechselrichter der PV-Anlage abgegebene Leistung betrachtet. Die Druckschrift DE 19961 705 A1 beschreibt einen Wechselrichter, bei dem der Arbeitspunkt des PV-Generators sowohl im Hinblick auf eine Maximierung der abgegebenen Leistung des PV-Generators, als auch im Hinblick auf die Höhe der Ausgangsspannung des Wechselrichters eingestellt wird.

Bei einstufigen Wechselrichtern erfolgt eine Änderung der Arbeitsspannung des PV-Generators durch eine Variation des Spannungsübertragungsverhältnisses zwischen der eingangsseitigen Zwischenkreisspannung und der ausgangsseitiger Netzspannung der Wechselrichterbrücke. Eine solche Variation des Spannungsübertragungsverhältnisses kann beispielweise durch unterschiedliche Schaltparameter von Schaltern der Wechselrichterbrücke (z.B. Schaltdauer, Tastverhältnis, Phasenlage des Schaltvorgangs im Bezug auf die Phasenlage der Wechselspannung) erfolgen. Der Variationsbereich des Spannungsübertragungsverhältnisses ist dabei relativ beschränkt.

Insbesondere ist eine untere Spannungsgrenze für die Zwischenkreisspannung eines Wechselrichters oder Spannungswandlers gegeben, die überschritten werden muss, damit ein Leistungsfluss vom PV-Generator in das Energieversorgungsnetz zustande kommen kann.

Aus dem Stand der Technik beispielsweise aus der Druckschrift EP 2 107672 10 A1, ist bekannt, die mindestens benötigte Zwischenkreisspannung des Wechselrichters und damit die untere Eingangsspannungsgrenze eines einstufigen Wechselrichters anhand einer gemessenen Spannung des Energieversorgungsnetzes und des bekannten maximalen Spannungsübertragungsverhältnisses rechnerisch zu bestimmen. In der Praxis nutzen bekannte MPP-Tracking-Verfahren den Arbeitsspannungsbereich jedoch nicht bis zu dieser rechnerisch bestimmten unteren Eingangsspannungsgrenze aus. In der zuvor genannten Druckschrift EP 2 107 672 A1wird beispielsweise eine Regelreserve beschrieben, die auf die rechnerisch bestimmte untere Eingangsspannungsgrenze addiert wird. Grund ist, dass in der Nähe dieser Grenze beispielsweise bedingt durch die Spannungsregelungsmechanismen der Eingangsspannung die Gefahr eines zeitweisen Unterschreitens der mindestens benötigten Zwischenkreisspannung besteht, was zu Verzerrungen der Signalform des eingespeisten Wechselstroms führen würde. Daher wird die mindestens benötigte Eingangsspannung mit einer Reserve beaufschlagt, um solche Verzerrungen gesichert zu vermeiden.

Mehrstufige Wechselrichter weisen einen größeren Variationsbereich des Spannungsübertragungsverhältnisses auf. Bei einem mehrstufigen Wechselrichter wird der Wechselrichterbrücke ein Gleichspannungswandler (DC (direct current) /DC-Wandler) vorgeschaltet, der eine zusätzliche Übersetzung zwischen Eingangs- und Zwischenkreisspannung einbringt. Auch der DC/DC-Wandler verfügt über Variationsmöglichkeiten seines Spannungsübertragungsverhältnisses, der mit dem Variationsbereich des Spannungsübertragungsverhältnisses der Wechselrichterbrücke kombiniert zu einem insgesamt größeren Variationsbereich führt. Ein solcher mehrstufiger Wechselrichter ist jedoch schaltungstechnisch aufwändiger und daher kostspieliger und ist durch die zusätzliche Wandlerstufe typischerweise mit höheren Wandlerverlusten behaftet. Grundsätzlich besteht zudem auch hier das Problem bzw. die Einschränkung, dass der zur Verfügung stehende Eingangsspannungsbereich zu niedrigen Spannungen hin von bekannten Nachführverfahren nicht bis zur rechnerisch bestimmten unteren Eingangsspannungsgrenze hin ausgeschöpft werden kann.

Es ist daher eine Aufgabe der vorliegenden Erfindung, ein Nachführverfahren der eingangs genannten Art zu schaffen, bei dem der Eingangsspannungsbereich eines Spannungswandlers möglichst nah bis an die rechnerisch bestimmte untere Eingangsspannungsgrenze ausgeschöpft werden kann. Es ist eine weitere Aufgabe der Erfindung, eine entsprechende Nachführeinrichtung sowie einen damit ausgestatteten Wechselrichter bereitzustellen.

Diese Aufgabe wird gelöst durch ein Verfahren, eine Nachführeinrichtung und einen Spannungswandler mit den Merkmalen der unabhängigen Ansprüche. Vorteilhafte Ausgestaltungen und Weiterbildungen sind Gegenstand der abhängigen Ansprüche.

Gemäß einem ersten Aspekt wird die Aufgabe durch eine Nachführverfahren für einen Spannungswandler, insbesondere einen Wechselrichter, einer Photovoltaikanlage, gelöst, bei dem eine Zwischenkreisspannung wiederholt um Spannungsschritte einer vorgegebenen Höhe in eine Richtung zu kleinerer oder zu größerer Spannung hin verändert wird. Das Verfahren zeichnet sich dadurch aus, dass eine mittlere Änderungsrate der Zwischenkreisspannung in einem Teilzeitraum zwischen zwei Spannungsschritten durch eine maximale mittlere Änderungsrate begrenzt wird, wobei die maximale mittlere Änderungsrate abhängig von der Höhe der Zwischenkreisspannung festgelegt wird.

Durch die Begrenzung der Änderungsrate wird erreicht, dass ein Regelkreis, der der Einstellung der Zwischenkreisspannung U_{ZW} dient, einem vorgegebenen Sollwert ohne Überschwinger folgen kann. Auf diese Weise kann ein eventuelles Unterschreiten einer unteren Eingangs- bzw. Zwischenkreisspannungs-grenze verhindert werden, auch wenn das Nachführverfahren die Zwischenkreisspannung bis nah an diese Grenze heranführt. Der zur Verfügung stehende Eingangsspannungsbereich kann nach unten hin folglich vollständig ausgenutzt werden. Gleichzeitig kann durch die Abhängigkeit der maximalen mittleren Änderungsrate von der Höhe der Zwischenkreisspannung erreicht werden, dass in einem nicht kritischen Bereich der Zwischenkreisspannung eine schnellere Ausregelung der Zwischenkreisspannung erfolgen kann, wodurch in diesem Bereich eine gute Reaktion des Nachführverfahrens auf einen sich ändernden Arbeitspunkt des PV-Generators sicher gestellt ist.

In einer vorteilhaften Ausgestaltung des Nachführverfahrens wird die maximale mittlere Änderungsrate abhängig von der Höhe einer Spannungsdifferenz zwischen der Zwischenkreisspannung und einer mindestens benötigten Zwischenkreisspannung festgelegt. Bevorzugt nimmt dabei die maximale mittlere Änderungsrate mit abnehmender Höhe der Spannungsdifferenz ab. Weiter bevorzugt ist sie oberhalb einer festgelegten Zwischenkreisspannung konstant. Auf diese Weise wird die Änderungsrate insbesondere im kritischen unteren Bereich der Zwischenkreisspannung so geändert, dass dem vorgegebenen Sollwert ohne Überschwinger gefolgt werden kann.

In weiteren vorteilhaften Ausgestaltungen des Nachführverfahrens wird die mindestens benötigte Zwischenkreisspannung anhand einer Netzspannung und ggf. zusätzlich anhand eines Einspeisestroms bestimmt. Auf diese Weise kann die untere Grenze des Spannungsbereichs genau an das Energieversorgungsnetz und ggf. zusätzlich an Einspeisebedingungen angepasst werden. Bevorzugt wird die mindestens benötigte Zwischenkreisspannung regelmäßig aktualisiert. Weiter bevorzugt erfolgt diese Aktualisierung der mindestens benötigten Zwischenkreisspannung um ein Vielfaches häufiger erfolgt als die Spannungsschritte. Auf diese Weise wird sichergestellt, dass das Nachführverfahren jederzeit mit aktuellen Werten der mindestens benötigten Zwischenkreisspannung arbeitet.

In einer weiteren vorteilhaften Ausgestaltung des Nachführverfahrens wird die maximale mittlere Änderungsrate mittels einer Aktualisierungsrate einer Regelung eines vom Wechselrichter in ein Wechselspannungsnetz eingespeisten Stromes festgelegt. Auch diese dient dazu, das Nachführverfahren stets mit aktuellen Parametern zu betreiben.

In weiteren vorteilhaften Ausgestaltungen wird die Höhe der Spannungsschritte abhängig von der Höhe der Zwischenkreisspannung festgelegt und/oder es wird der Sollwert für die Zwischenkreisspannung als eine stetige Funktion mit einer endlichen Änderungsrate, bevorzugt rampenförmig, vorgegeben und/oder es wird eine Aktualisierungsrate einer Regelung eines vom Wechselrichter in ein Wechselspannungsnetz eingespeisten Stromes angepasst. Die genannten Ausgestaltungen stellen geeignete Möglichkeiten dar, um die Änderungsrate zu beeinflussen und zu gewährleisten, dass die mittlere Änderungsrate unterhalb der maximalen mittleren Änderungsrate bleibt.

Gemäß einem zweiten Aspekt wird die Aufgabe gelöst durch eine Nachführeinrichtung für einen Spannungswandler, die dazu eingerichtet ist, das vorstehend beschriebene Nachführverfahren auszuführen. Gemäß einem dritten Aspekt wird die Aufgabe gelöst durch einen Wechselrichter, insbesondere einen einstufigen Wechselrichter, der eine derartige Nachführeinrichtung aufweist. Es ergeben sich die gleichen Vorteile wie beim ersten Aspekt.

Die Erfindung wird nachfolgend anhand von sechs Figuren näher erläutert. Die Figuren zeigen:
- Fig. 1: eine Photovoltaikanlage in einem Blockschaltbild;
- Fig. 2: eine schematische Darstellung eines Verlaufs einer Zwischenkreisspannung in einem Nachführverfahren gemäß dem Stand der Technik;
- Fig. 3: eine schematische Darstellung eines Verlaufs einer Zwischenkreisspannung in einem ersten Ausführungsbeispiel des anmeldungsgemäßen Nachführverfahrens;
- Fig. 4: eine schematische Darstellung eines Verlaufs einer Zwischenkreisspannung in einem weiteren Nachführverfahren gemäß dem Stand der Technik;
- Fig. 5: eine schematische Darstellung eines Verlaufs einer Zwischenkreisspannung in einem zweiten Ausführungsbeispiel eines anmeldungsgemäßen Nachführverfahrens;
- Fig. 6: ein Flussdiagramm eines Nachführverfahrens in einem weiteren Ausführungsbeispiel.

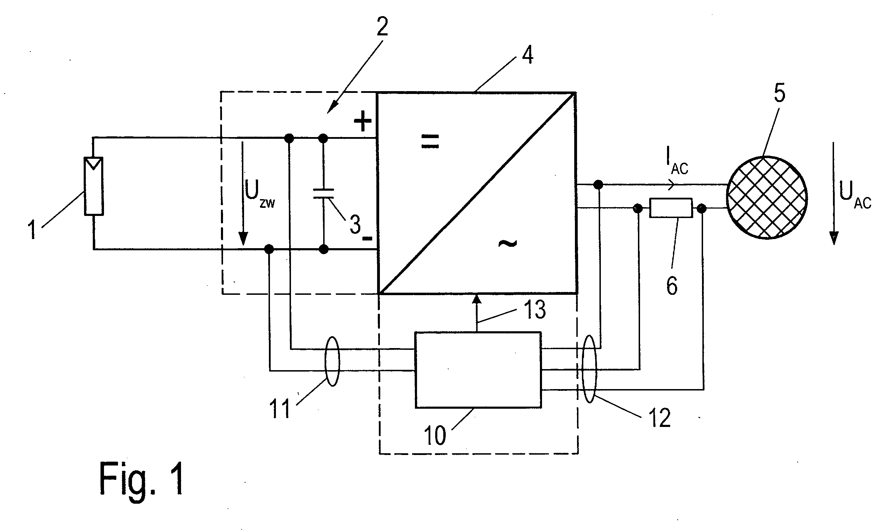

Fig. 1 zeigt eine Photovoltaikanlage, nachfolgend abkürzend PV-Anlage genannt, in einem schematischen Blockschaltbild. Die PV-Anlage umfasst einen Photovoltaikgenerator 1 (PV-Generator 1), der über Gleichstromleitungen mit einem Zwischenkreis 2 verbunden ist. Beispielhaft ist der PV-Generator 1 in der Fig. 1 durch das Schaltzeichen einer einzelnen Photovoltaikzelle symbolisiert. In einer Umsetzung der dargestellten PV-Anlage kann es sich bei dem PV-Generator 1 um ein einzelnes PV-Modul, das eine Vielzahl von Zellen aufweist, oder um eine Zusammenschaltung mehrerer PV-Module, insbesondere in einer Serienverschaltung zu einem String oder zu mehreren parallel geschalteten Strings, handeln.

Der Zwischenkreis 2 weist zumindest einen Zwischenkreiskondensator 3 auf. Die im Zwischenkreis 2 anliegende Spannung, die im dargestellten Beispiel abgesehen von Leitungsverlusten gleich der Eingangsspannung und damit der Spannung am PV-Generator 1 ist, wird nachfolgend als Zwischenkreisspannung U_{ZW} bezeichnet. Über den Zwischenkreis 2 ist der PV-Generator 1 mit Gleichstromeingängen eines Wechselrichters 4 verbunden. Wie durch die gestrichelte Erweiterung des Symbols des Wechselrichters 4 nach links in der Fig. 1 andeutet ist, kann der Zwischenkreis 2 dabei auch in den Wechselrichter 4 integriert sein. Der Wechselrichter 4 belastet den Zwischenkreis 2 üblicherweise nicht kontinuierlich. Dafür ist beispielsweise ein nicht kontinuierlichen Leistungsfluss bei einem abgegebenen Wechselstrom ursächlich oder auch ein gepulstes Schalten von Leistungshalbleiterschaltern in dem Wechselrichter 4. Der Zwischenkreiskondensator 3 dient einer Glättung der Zwischenkreisspannung Uzw und hält Spannungseinbrüche der Zwischenkreisspannung U_{ZW}, die aufgrund der nicht kontinuierlichen Stromentnahme auftreten, möglichst klein, wodurch eine hohe mittlere Leistungsentnahme aus dem Zwischenkreis 2 und damit aus dem PV-Generator möglich ist.

Für das Folgende wird davon ausgegangen, dass der Wechselrichter 4 ein einstufiger Wechselrichter ist. Das anmeldungsgemäße Nachführverfahren und die Nachführeinrichtung kann jedoch ebenso zusammen mit einem mehrstufigen Wechselrichter bzw. grundsätzlich mit jedem mit einem PV-Generator verbundenen Spannungswandler eingesetzt werden. Von besonderem Vorteil ist jedoch die Verwendung mit einem einstufigen Wechselrichter, da in dem Fall der zur Verfügung stehende Eingangsspannungsbereich üblicherweise den größten Einschränkungen insbesondere aufgrund einer mindestens benötigten Zwischenkreisspannung unterliegt.

Im dargestellten Ausführungsbeispiel ist der Zwischenkreiskondensator 3 im Gleichstromeingangskreis des Wechselrichters 4 angeordnet. Bei Wechselrichtern, die mehrstufig aufgebaut sind und die neben einer Wechselrichterbrücke noch einen Gleichspannungswandler (DC/DC-Wandler) aufweisen, kann ein solcher (Puffer-) Kondensator alternativ am Ausgang des DC/DC-Wandlers vorgesehen sein. Unabhängig davon wird im Rahmen der Anmeldung verallgemeinernd der Kreis, in dem der (Puffer-) Kondensator angeordnet ist, als Zwischenkreis und die Gleichspannung am Kondensator 3 als Zwischenkreisspannung Uzw bezeichnet.

Der Wechselrichter 4 weist einen Wechselstromausgänge auf, über den der Wechselrichter 4 mit einem ein- oder mehrphasigen Energieversorgungsnetz 5 verbunden ist. Das Energieversorgungsnetz 5 kann ein öffentliches Versorgungsnetz oder ein privates Versorgungsnetz (Inselbetrieb) sein. Beispielhaft ist der Wechselrichter 4 mit nur zwei Wechselstromausgängen für ein einphasiges Einspeisen in das Energieversorgungsnetz 5 ausgelegt. Es versteht sich, dass auch eine andere als die dargestellte einphasige Auslegung des Wechselrichters 4 möglich ist, z.B. eine dreiphasige Auslegung.

Die Fig. 1 zeigt lediglich die im Rahmen der Anmeldung wesentlichen Elemente der PV-Anlage. Auf der Wechselstromseite des Wechselrichters 4 können beispielsweise nicht dargestellte Schaltorgane (z.B. Trenner), Filter (z.B. Sinusfilter), Netzüberwachungseinrichtungen und/oder Transformatoren vorgesehen sein. Ebenso können gleichstromseitig in der Verbindung zwischen dem PV-Generator 1 und dem Zwischenkreis 2 bzw. dem Wechselrichter 4 hier nicht dargestellte Elemente wie z.B. Sicherungsorgane oder Schaltorgane, z.B. Lasttrennschalter, DC-Schütze, angeordnet sein.

Im Folgenden wird die Spannung der Phase oder der Phasen, auf denen der Wechselrichter 4 in das Energieversorgungsnetz 5 einspeist, als Netzspannung U_{AC} bezeichnet. Von eventuellen geringen Übertragungsverlusten zwischen dem Wechselrichter 4 und dem Energieversorgungsnetz 5 abgesehen entspricht die Netzspannung U_{AC} der an den Wechselspannungsausgängen des Wechselrichters 4 anliegenden Spannung. Der im Einspeisebetrieb vom Wechselrichter 4 in das Energieversorgungsnetz 5 fließende Strom wird nachfolgend als Einspeisestrom I_{AC} bezeichnet. Wie durch einen zwischen dem Wechselrichter 4 und dem Energieversorgungsnetz 5 angeordneten Messwiderstand 6 symbolisiert ist, ist eine Messmöglichkeit für den Einspeisestrom I_{AC} vorgesehen. Es versteht sich, dass diese Messmöglichkeit, zum Beispiel der Messwiderstand 6, auch in den Wechselrichter 4 integriert sein kann. Neben dem dargestellten Messwiderstand 6 kann eine Strommessung auch über andere bekannte Stromsensoren erfolgen, beispielsweise über einen induktiven Stromsensor oder über einen Hall-Sensor.

Weiter umfasst die PV-Anlage eine Nachführeinrichtung 10, die Eingänge 11 und 12 aufweist, über die die Nachführeinrichtung 10 die Zwischenkreisspannung U_{ZW}, die Netzspannung U_{AC} und den Einspeisestrom I_{AC} bestimmen kann. Darüber hinaus ist die Nachführeinrichtung 10 über einen Steuerausgang 13 mit dem Wechselrichter 4 verbunden. Über den Steuerausgang 13 kann die Nachführeinrichtung 10 dem Wechselrichter 4 den Sollwert der Zwischenkreisspannung U_{ZW} vorgeben. Dabei wird dieser Sollwert der Zwischenkreisspannung Uzw so bestimmt, dass der PV-Generator 1 möglichst bei einem Arbeitspunkt betrieben wird, in dem er eine maximale Leistung abgibt, bzw. in dem der Wechselrichter 4 in der Lage ist, eine maximale elektrische Leistung in das Energieversorgungsnetz 5 einzuspeisen. Es versteht sich, dass statt der Vorgabe des Sollwerts der Zwischenkreisspannung U_{ZW} auch eine andere elektrische Kenngröße für den Wechselrichter 4 vorgegeben werden kann, die gleichermaßen zur Einstellung des gewünschten Arbeitspunktes des PV-Generators 1 führt. Beispielsweise kann auch ein Sollwert für einen vom PV-Generator 1 gelieferten Strom erfolgen. Wenn nachfolgend Nachführverfahren zur Einstellung des optimalen Arbeitspunktes des PV-Generators 1 beispielhaft anhand einer Sollwertvorgabe für die Zwischenkreisspannung U_{ZW} beschrieben werden, so ist das anmeldungsgemäße Verfahren nicht darauf beschränkt, sondern kann entsprechend auf die Sollwerte anderer elektrischer Kenngrößen übertragen werden. Wie durch die gestrichelte Erweiterung des Symbols des Wechselrichters 4 nach unten in der Fig. 1 andeutet ist, kann der Nachführeinrichtung 10 in den Wechselrichter 4 integriert sein.

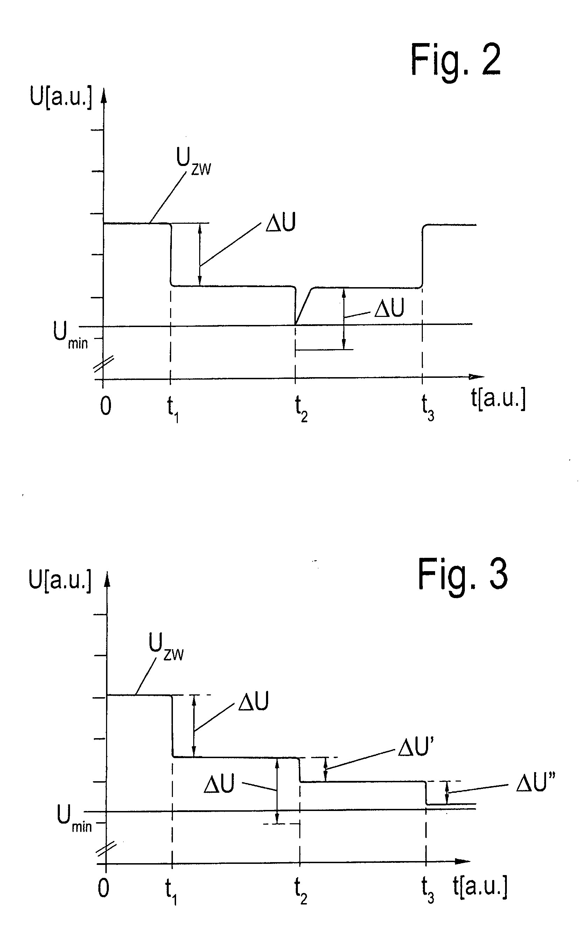

In Fig. 2 ist ein Beispiel eines Verlaufs der Zwischenkreisspannung U_{ZW} bei einem Nachführverfahren gemäß dem Stand der Technik in einem Diagramm dargestellt. Die Höhe der Zwischenkreisspannung U_{ZW} ist dabei auf der Ordinate des Diagramms und die fortschreitende Zeit t auf der Abszisse des Diagramms angegeben. Beide Achsen tragen willkürlichen Einheiten (a.u.-arbitrary units). Bei dem dargestellten bekannten Nachführverfahren wird ausgehend von einem aktuellen Wert der Zwischenkreisspannung U_{ZW} ein Spannungsschritt einer vorgegebenen Höhe ΔU in Richtung einer größeren oder kleineren Zwischenkreisspannung vorgenommen. Für die so geänderte Zwischenkreisspannung U_{ZW} wird die Leistung, die der PV-Generator liefert oder auch die Leistung, die der Wechselrichter bei diesem Arbeitspunkt des PV-Generators in das Energieversorgungsnetz einspeist, ermittelt und mit der vor der Änderung der Zwischenkreisspannung gelieferten oder eingespeisten Leistung verglichen. Wenn sich die Leistung durch die Änderung der Zwischenkreisspannung U_{ZW} erhöht hat, wird nachfolgend ein weiterer Spannungsschritt der gleichen Höhe ΔU in die gleiche Richtung (also entweder Erhöhung oder Erniedrigung) vorgenommen. Hat sich die Leistung dagegen verringert, wird nachfolgend ein Schritt in die entsprechend andere Richtung vorgenommen.

Ändert sich der optimale Arbeitspunkt durch geänderte Betriebsbedingungen des PV-Generators und/oder geänderte Einstrahlungsbedingungen mit der Zeit, folgt auf diese Weise der tatsächliche Arbeitspunkt dem optimalen Arbeitspunkt nach bzw. umschwankt ihn. Aus dem Stand der Technik sind auch andere Abfolgen von Spannungsschritten bekannt, wobei nach weiteren Kriterien und/oder komplexen Algorithmen die Richtungen der Spannungsänderungen bestimmt werden; diesen Verfahren haben gemeinsam, dass die vorgegebene Höhe ΔU der Spannungsschritte im wesentlichen konstant ist. Es versteht sich, dass auch solche Verfahren statt des hier dargestellten vereinfachten Nachführverfahren verwendet werden können.

In der Fig. 2 ist ein solcher Spannungsschritt der Höhe ΔU in diesem Fall zu kleinerer Zwischenkreisspannung U_{ZW} hin bei dem Zeitpunkt t₁ erfolgt. Es wird davon ausgegangen, dass die zum Zeitpunkt t₁ erfolgte Erniedrigung der Zwischenkreisspannung U_{ZW} zu einer höheren gemessenen Leistung.geführt hat. Entsprechend initiiert die Nachführeinrichtung zu einem Zeitpunkt t₂ eine weitere Absenkung der Zwischenkreisspannung um den Wert ΔU. Die Sollwertvorgabe für diese Absenkung ΔU ist in dem Diagramm als gestrichelte horizontale Linie ab dem Zeitpunkt t₂ dargestellt. Diese Absenkung der Zwischenkreisspannung U_{ZW} um den Wert ΔU würde jedoch zu einer Unterschreitung einer mindestens benötigten Zwischenkreisspannung Uₘᵢₙ führen, die benötigt wird, um eine unverzerrte Ausgangswechselspannung zur Einspeisung in das Energieversorgungsnetz 5 bereitzustellen. Die mindestens benötigte Zwischenkreisspannung Uₘᵢₙ wird im Folgenden abkürzend auch als Mindestspannung Uₘᵢₙ bezeichnet. Der in der Fig. 2 als horizontale Linie eingezeichnete Wert der Mindestspannung Uₘᵢₙ ist dabei entweder fest vorgegeben oder wurde anhand von gemessenen Parametern des Energieversorgungsnetzes bestimmt.

Die Einhaltung des Kriteriums, dass die Mindestspannung Uₘᵢₙ von der Zwischenkreisspannung U_{ZW} nicht unterschritten werden darf, hat eine höhere Priorität als die Einstellung eines optimalen Arbeitspunktes durch die Nachführeinrichtung. Wenn folglich der Wechselrichter zunächst der Sollwertvorgabe der Nachführeinrichtung folgt, wird die Mindestspannung Uₘᵢₙ unterschritten, woraufhin der von der Nachführeinrichtung ausgegebene Sollwert sofort wieder angehoben wird. Im Diagramm der Fig. 2 äußert sich dieses durch die nach unten bis zur Mindestspannung Uₘᵢₙ reichende Zacke in der Verlaufskurve der Zwischenkreisspannung U_{ZW}. Falls der optimale Arbeitspunkt zwischen der zum Zeitpunkt t₁ eingenommenen Zwischenkreisspannung und der Mindestspannung Uₘᵢₙ liegt, kann dieser optimale Arbeitspunkt nicht eingenommen werden. Dieses ist insbesondere bei einstufigen Wechselrichtern oder Spannungswandlern problematisch, da diese bauartbedingt aufgrund der mindestens benötigten Zwischenkreisspannung üblicherweise nicht über einen großen Spannungsvariationsbereich des Arbeitspunktes verfügen und dieser inhärent nicht große Variationsbereich folglich zusätzlich bei den bekannten Nachführverfahren nicht ausgeschöpft werden kann.

In Fig. 3 ist auf analoge Weise wie in Fig. 2 ein Spannungsverlauf einer Zwischenkreisspannung U_{ZW} bei Durchführung eines anmeldungsgemäßen Nachführverfahrens wiedergegeben. Das Verfahren kann beispielsweise innerhalb der in Fig. 1 dargestellten PV-Anlage ausgeführt werden und wird daher beispielhaft mit Bezug auf das Ausführungsbeispiel der Fig. 1 und unter Verwendung der in dem Zusammenhang benutzten Bezugszeichen beschrieben.

Zunächst wird zu einem Zeitpunkt t₁ ebenso wie beim Verfahren der Fig. 2 eine Verringerung der Zwischenkreisspannung U_{ZW} um einen Spannungsschritt der Höhe ΔU vorgenommen. Wiederum wird davon ausgegangen, dass sich die vorgenommene Verringerung der Zwischenkreisspannung U_{ZW} zum Zeitpunkt t₁ positiv auf die gemessene Leistung ausgewirkt hat. Daher wird zum Zeitpunkt t₂ ein weiterer Schritt zur Verringerung der Zwischenkreisspannung U_{ZW} vorgenommen. Diese Verringerung erfolgt jedoch nicht um die gleiche Schrittweite ΔU wie zum Zeitpunkt t₁, sondern um eine geringere Schrittweite ΔU'< ΔU, da eine Verringerung um die Schrittweite ΔU bereits die Gefahr bergen würde, die Mindestspannung Uₘᵢₙ zu unterschreiten. Anders ausgedrückt wird die mittlere Änderungsrate |ΔU'/Δt| bei dem Spannungsschritt zum Zeitpunkt t₂ gegenüber der entsprechenden mittleren Änderungsrate |ΔU/Δt| bei dem Spannungsschritt zum Zeitpunkt t₁ verkleinert. Δt bezeichnet dabei einen Zeitraum einer endlichen Größe, der um den entsprechenden Zeitpunkt des Spannungsschrittes liegt. Δt wird dabei nicht infinitesimal klein, aber kleiner oder gleich der Differenz (t₂ - t₁) gewählt.

Zu einem dritten Zeitpunkt t₃ erfolgt eine weitere Verringerung, diesmal um einen Schrittweite von ΔU", durch die eine weitere Annäherung an die Mindestspannung Uₘᵢₙ erreicht wird, ohne diese zu unterschreiten. Grundsätzlich kann dabei die Schrittweite ΔU" ebenso groß sein wie die Schrittweite ΔU'. Sie kann aber auch eine abweichende Größe aufweisen, beispielsweise indem die Schrittweite zumindest unterhalb eines vorgegebenen Grenzwertes kontinuierlich mit abnehmendem Abstand zwischen Zwischenkreisspannung U_{ZW} und Mindestspannung Uₘᵢₙ abnimmt.

Das dargestellte Nachführverfahren erreicht eine bessere Ausnutzung des Spannungsvariationsbereichs dadurch, dass die Höhe der beim Nachführverfahren vorgenommenen Spannungsschritte ΔU nicht konstant über den gesamten Spannungsbereich der Zwischenkreisspannung U_{ZW}, durchgeführt wird, sondern in Abhängigkeit von der Höhe der Zwischenkreisspannung U_{ZW} bzw. in Abhängigkeit von der Differenzspannung zwischen der Zwischenkreisspannung Uzw und der Mindestspannung Uₘᵢₙ.

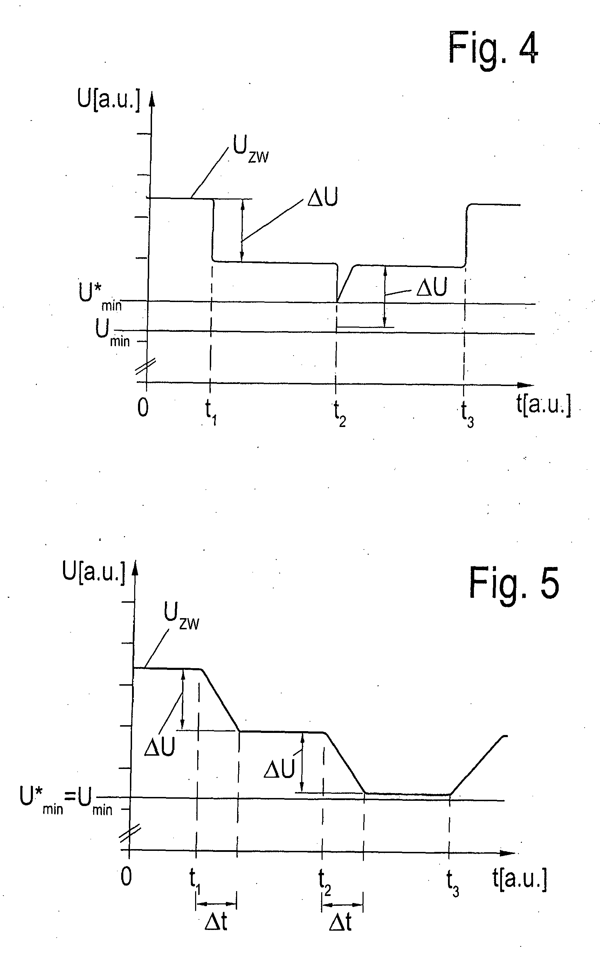

Fig. 4 verdeutlicht ein weiteres Problem, das bei einem aus dem Stand der Technik bekannten Nachführverfahren wie es im Zusammenhang mit Fig. 2 beschrieben wurde, auftreten kann. Wiederum wird bei einem ersten Zeitpunkt t₁ eine Absenkung der Zwischenkreisspannung U_{ZW} um einen Spannungsschritt der Höhe ΔU vorgenommen. Wie zuvor wird davon ausgegangen, dass mit dieser Absenkung eine Erhöhung der gemessenen Leistung einhergeht und von daher in einem nächsten Schritt eine weitere Absenkung der Zwischenkreisspannung U_{ZW} durchgeführt werden soll, um den optimalen Arbeitspunkt des PV-Generators einzustellen. Diese nächste Absenkung wird zu einem zweiten Zeitpunkt t₂ vorgenommen, wobei die Höhe der Zwischenkreisspannung U_{ZW} vor dem zweiten Zeitpunkt t₂ derart ist, dass auch nach Absenkung um einen Spannungsschritt der gleichen Höhe ΔU die Zwischenkreisspannung noch größer als die Mindestspannung Uₘᵢₙ wäre, wie anhand der gestrichelten horizontalen Linie rechts vom Zeitpunkt t₂ angedeutet ist. Dennoch treten am Wechselstromausgang des Wechselrichters kurz nach dem Zeitpunkt t₂ Verzerrungen auf, die zur Rückkehr zu der zuvor, also zwischen dem Zeitpunkten t₁ und t₂ eingestellten Zwischenkreisspannung U_{ZW} führen. Der Grund für dieses Verhalten liegt in der stufenförmigen Änderung des Sollwertes für die Zwischenkreisspannung U_{ZW}. Zur Einstellung der tatsächlichen Zwischenkreisspannung Uzw an den vorgegebenen Sollwert weist jeder Wechselrichter ebenso wie jeder andere Spannungswandler, der zur Einstellung der Zwischenkreisspannung Uzw und damit des Arbeitspunktes des PV-Generators dient, einen Regelkreis auf. Bei einer stufenartigen Absenkung des Sollwertes der Zwischenkreisspannung U_{ZW} nimmt diese zunächst ebenfalls sehr schnell ab und läuft Gefahr, in Form eines Unterschwingers zumindest kurzzeitig unter diesen Sollwert zu fallen. Zum einen kann ein solches Unterschwingen bereits unmittelbar dazu führen, dass die Zwischenkreisspannung Uzw kurzfristig unter die Mindestspannung Uₘᵢₙ fällt, selbst wenn neue Sollwert der Zwischenkreisspannung noch der oberhalb der Mindestspannung Uₘᵢₙ liegt, womit eine Verzerrung der Ausgangswechselspannung des Wechselrichters verbunden wäre. Aber auch wenn ein Unterschwingen bis unter die Mindestspannung Uₘᵢₙ nicht auftreten würde, können hohe im Zwischen kreis fließende Ströme während des Abfangens der Zwischenkreisspannung U_{ZW} auf den neuen Sollwert zu Verzerrungen der Signalform der Ausgangswechselspannung führen. Bei der bekannten stufenförmigen Änderung des Sollwerts der Zwischenkreisspannung U_{ZW} bei bekannten Nachführverfahren kann deshalb auch ein Sprung auf einen noch oberhalb der Mindestspannung Uₘᵢₙ liegenden Wert nicht ausgeführt werden. Dieses ist in der Fig. 4 durch eine effektive Mindestspannung U*ₘᵢₙ symbolisiert, die oberhalb der bislang betrachteten Mindestspannung Uₘᵢₙ liegt. Durch die bei dem bekannten Nachführverfahren notwendige Berücksichtigung der beschriebenen regelungstechnischen Ausgleichsvorgänge in Form der (höheren) effektiven Mindestspannung U*ₘᵢₙ, die sich aus der Mindestspannung Uₘᵢₙ zuzüglich einer Reserve ergibt, wird folglich die nutzbare Spannungsvariationsbreite des Wechselrichters zu kleinen Spannungen hin weiter beschränkt.

In Fig. 5 ist ein Spannungsverlauf einer Zwischenkreisspannung Uzw bei Durchführung eines Nachführverfahrens in einem zweiten Ausführungsbeispiel gemäß der Anmeldung in gleicher Art wie in den vorangehenden Figuren dargestellt. Auch bei diesem Verfahren erfolgt eine Variation der Zwischenkreisspannung U_{ZW}, wobei für verschiedene Spannungsstufen ein Vergleich der gemessenen Einspeiseleistung herangezogen wird, um den Arbeitspunkt des PV-Generators geänderten Bedingungen nachzuführen.

Eine erste Spannungsänderung um einen Spannungsschritt der Höhe ΔU wird zu einem ersten Zeitpunkt t₁ und zu einem zweiten Zeitpunkt t₂ initiiert. Dabei wird der neue Sollwert für die Zwischenkreisspannung U_{ZW} jedoch nicht stufenförmig vorgegeben, sondern durch einen langsam über eine Zeitdauer Δt abfallenden Sollwert. Beispielhaft ist im Diagramm der Fig. 5 ein linear fallender Sollwertverlauf in Form einer Rampe gezeigt. Der Verlauf der Sollwertvorgabe zum neuen Sollwert hin kann jedoch auch einer anderen stetigen und möglichst glatten Kurvenform folgen oder in diskreten Schritte erfolgen, die wesentlich kleiner als die Gesamthöhe des Spannungsschrittes der Höhe ΔU sind und in wesentlich schneller zeitlicher Abfolge vorgegeben werden, so dass die Größe der zeitlichen Änderungsrate wiederum unterhalb einer maximalen mittlere Änderungsrate liegt. Einer solchen stetigen und langsamen Änderung des Sollwertes kann der Regelkreis bei Einstellung der Zwischenkreisspannung U_{ZW} ohne Überschwinger folgen und auch ohne dass ungewöhnlich hohe Ströme im Regelprozess fließen bzw. Verzerrungen auftreten.

Alternativ können die beschriebenen Verzerrungen auch vermieden werden, indem die Dynamik der Regelung (Regelcharakteristik) insbesondere des Einspeisestromes, die sich im Wesentlichen aus der Aktualisierungsrate der Regelung ergibt, derart verringert wird, dass die Regelung insgesamt langsamer arbeitet. Dies hat allerdings den Nachteil, dass auch auf eventuelle dynamische Ereignisse wie Netzfehler ebenfalls verlangsamt reagiert wird und sollte daher nur in Ausnahmefällen verwendet werden.

Im Resultat kann eine nah bei der Mindestspannung Uₘᵢₙ liegende Zwischenkreisspannung U_{ZW} tatsächlich auch erreicht werden (vgl. insbesondere den Spannungsschritt beim zweiten Zeitpunkt t₂). Dadurch nähert sich die effektive Mindestspannung U*ₘᵢₙ der (berechneten) Mindestspannung Uₘᵢₙ an und fällt bei geeigneter Wahl der Parameter des Kurvenverlaufs der Sollwertvorgabe mit dieser zusammen.

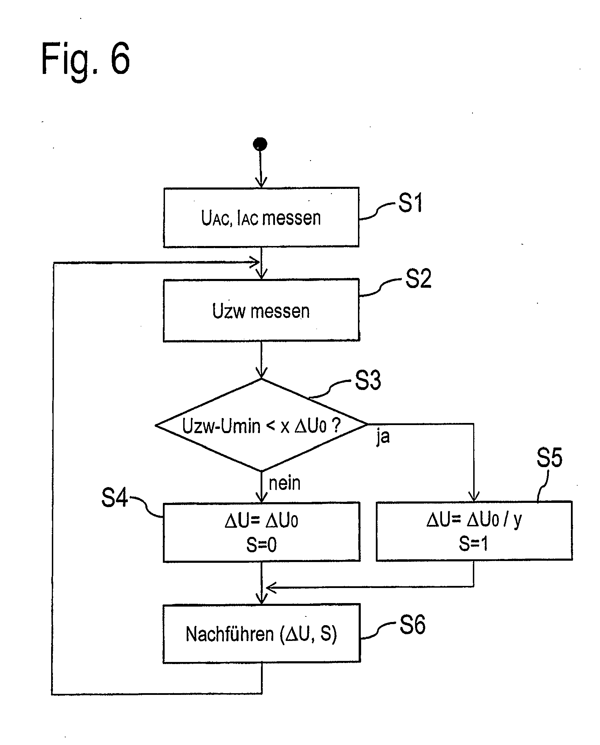

Es versteht sich, dass die im Zusammenhang mit der Fig. 3 beschriebene Anpassung der Höhe der Spannungsschritte beim Nachführverfahren mit der im Zusammenhang mit Fig. 5 beschriebenen Vermeidung einer sprunghaften Sollwertänderung bei der Änderung der Zwischenkreisspannung U_{ZW} auch kombiniert werden können. Ein solches kombiniertes Verfahren ist in Fig. 6 in einem weiteren Ausführungsbeispiel in Form eines Flussdiagramms beschrieben.

In einem ersten Schritt S1 wird die Netzspannung U_{AC} und der Einspeisestrom I_{AC} gemessen. Anhand dieser beiden Werte wird eine benötigte Mindestspannung Uₘᵢₙ ermittelt.

In einem zweiten Schritt S2 wird die Zwischenkreisspannung U_{ZW} gemessen oder alternativ anhand des aktuellen Sollwertes für die Zwischenkreisspannung U_{ZW} ermittelt und diese in einem nächsten Schritt S3 mit der Mindestspannung Uₘᵢₙ verglichen. Wenn der Abstand der Zwischenkreisspannung U_{ZW} von Mindestspannung Uₘᵢₙ kleiner als ein vorgegebener Wert ist, verzweigt das Verfahren zu einem Schritt S5, anderenfalls wird es mit einem Schritt S4 fortgesetzt. Der vorgegebene Abstand wird dabei in dem dargestellten Verfahren mittels eines Faktors x aus einer Standardschrittweise ΔU₀ für das Nachführverfahren bestimmt. Der Wert des Faktors x kann beispielsweise x=3 betragen.

In dem Schritt S4, also dem Fall, in dem die Zwischenkreisspannung Uzw um mehr als der Wert x ΔU₀ größer als die Mindestspannung Uₘᵢₙ ist, wird als Schrittweite für das Nachführverfahren ΔU der Wert ΔU₀ übernommen. Gleichzeitig wird ein Marker (Flag) S auf den Wert Null gesetzt. Im Schritt S5 dagegen, also in dem Fall, in dem sich die Zwischenkreisspannung U_{ZW} auf einen Abstand X ΔU₀ oder weniger der Mindestspannung Uₘᵢₙ genähert hat, wird die Schrittweite ΔU₀ auf einen Bruchteil der Normschrittweite ΔU₀ gesetzt, wobei dieser Bruchteil durch einen Faktor 1/y vorgegeben ist. Der Wert von y kann beispielsweise im Bereich von 2 bis 4 liegen. Zudem wird der Marker S auf den Wert Eins gesetzt.

Im danach folgenden Schritt S6 wird eine oder mehrere Nachführschritte durchgeführt, wobei als Schrittweite der Wert ΔU eingesetzt wird und wobei eine stufenförmige Sollwertänderung um diesen Wert ΔU vorgenommen wird, wenn der Marker S=0 ist, und eine rampenförmige Änderung des Sollwerts, wenn der Marker den Wert S=1 hat.

Eine kleine Schrittweite bei der Differenzspannung ΔU und auch eine rampenförmige Änderung des Sollwerts, wie sie aus dem Schritt S5 resultieren, verlangsamen das Nachführverfahren und insbesondere dessen Reaktionsgeschwindigkeit auf Einstrahlungsänderungen. Durch die Abfrage in dem Schritt S3 wird jedoch erreicht, dass dieses nur in einem "kritischen" Bereich der Zwischenkreisspannung Uzw in der Nähe der Mindestspannung Uₘᵢₙ auftritt. Der zur Verfügung stehende Zwischenkreisspannungsbereich wird so nach unten hin maximal genutzt, wodurch insbesondere eine Einspeisung von PV-Leistung bereits bei sehr geringen Einstrahlungsstärken ermöglicht wird. Dennoch weist das Nachführverfahren im oberen, unkritischen Bereich der Zwischenkreisspannung ein schnelles Reaktionsvermögen auf einen sich ändernden optimalen Arbeitspunkt auf.

Nach Ausführung von einem oder mehreren der Nachführschritte verzweigt das Verfahren zurück zum Schritt S2 um ggf. ausgehend von einem neu gemessenen Wert der Zwischenkreisspannung U_{ZW} die Schrittweite ΔU bzw. den Marker S neu zu setzen. Darüber hinaus kann vorgesehen sein, in regelmäßigen Abständen, beispielsweise nach Ausführen einer bestimmten Anzahl von Nachführschritten nicht zurück zum Schritt S2, sondern zurück zum Schritt S1 zu verzweigen, wodurch regelmäßig auch der Wert der Mindestspannung Uₘᵢₙ anhand der aktuellen Netzspannung U_{AC} und dem aktuellen Einspeisestrom I_{AC} angepasst wird. Besonders vorteilhaft ist eine Berechnung und Anpassung der Mindestspannung Uₘᵢₙ unabhängig vom dargestellten Ablauf im Rahmen der Stromregelung, die mit deutlich höherer Frequenz als die Spannungsnachführung durchgeführt wird. Eine solche Anpassung bietet den Vorteil, dass adaptiv stets eine für eine aktuelle Leistung notwendige Mindestspannung Uₘᵢₙ berücksichtigt wird und nicht wie im Stand der Technik eine konstante für eine hohe Einspeiseleistung notwendige Mindestspannung angenommen wird.

Ein weiteres Ausführungsbeispiel eines Nachführverfahrens wird nachfolgend anhand seines Verhaltens bei einer Variation der Einstrahlungsstärke in einem typischen Tagesablauf verdeutlicht.

Nachts, d.h. ohne Sonneneinstrahlung und bei nicht vorhandener PV-Leistung, ist die Leerlaufspannung des PV-Generators deutlich unterhalb der erforderlichen Spannung, die bei mindestens möglicher Netzspannung zur Einspeisung erforderlich wäre; der Wechselrichter ist in der Regel deaktiviert.

Morgens bei steigender Sonneneinstrahlung und noch sehr geringer PV-Leistung, aktiviert sich der Wechselrichter und ermittelt aus der aktuellen Netz-spannung U_{AC} die Mindestspannung Uₘᵢₙ, also die mindestens zur Einspeisung erforderliche Zwischenkreisspannung.

Bei weiter steigender Sonneneinstrahlung steigt sowohl die PV-Leistung als auch die Leerlaufspannung des PC-Generators weiter an. Sobald die Mindestspannung Uₘᵢₙ überschritten wird, wird sowohl die Taktung einer Wechselrichterbrücke des Wechselrichters zur Einspeisung ins Stromnetz als auch das Nachführverfahren mit Spannungsschritten kleiner Höhe ΔU (z.B. 1 Volt) bei optional begrenzter Änderungsrate aktiviert.

Bei weiter steigender Sonneneinstrahlung steigt sowohl die PV-Leistung als auch die Leerlaufspannung weiter an, die Zwischenkreisspannung U_{ZW} wird aber zunächst durch das Nachführverfahren bei oder im Bereich der Mindestspannung Uₘᵢₙ gehalten. Zusätzlich kann korrespondierend zur ansteigenden Leistung der Wert der Mindestspannung kontinuierlich überprüft und ggf. angepasst werden.

Bei noch weiter steigender Sonneneinstrahlung übersteigt auch die Spannung, bei der optimale Arbeitspunkt des PV-Generators liegt, die Mindestspannung Uₘᵢₙ, wobei dann das Nachführverfahren die Zwischenkreisspannung U_{ZW} korrespondierend mit dem optimalen Arbeitspunkt anhebt. Je weiter die Zwischenkreisspannung U_{ZW} die Mindestspannung Uₘᵢₙ übersteigt, desto größer können sowohl die Höhe ΔU der Spannungsschritte beim Nachführverfahren als auch die Änderungsraten der Sollwerte gewählt werden, bis Standardwerte erreicht sind. Alternativ kann wie beim Ausführungsbeispiel der Fig. 6 ein Abstandswert definiert werden, um einen Abstand zwischen der Zwischenkreisspannung U_{ZW} und der Mindestspannung Uₘᵢₙ zu definieren, oberhalb dessen von einem erfindungsgemäß optimierten Betrieb in einen Standardbetrieb, d.h. ein Nachführen mit größeren stufenförmigen Spannungsschritten (z.B. 10 V) umgeschaltet wird.

Der chronologische Ablauf am Tagesende, d.h. bei sinkender Einstrahlung und damit sinkender Spannung am optimalen Arbeitspunkt und sinkender Zwischenkreisspannung U_{ZW}, verläuft reziprok. Dabei kann vorgesehen sein, während des gesamten Vorganges die Netzspannung U_{AC} zu überwachen und die Mindestspannung Uₘᵢₙ ggf. an Änderungen der Netzspannung anzupassen.

### Bezugszeichenliste

- 1: PV-Generator
- 2: Zwischenkreis
- 3: Zwischenkreiskondensator
- 4: Wechselrichter
- 5: Energieversorgungsnetz
- 6: Messwiderstand

- 10: Nachführeinrichtung
- 11, 12: Eingang
- 13: Steuerausgang

- Uzw: Zwischenkreisspannung
- Uₘᵢₙ: Mindestspannung
- U*ₘᵢₙ: effektive Mindestspannung
- ΔU: Höhe eines Spannungsschritts
- ΔU₀: Standardhöhe eines Spannungsschritts

- U_{AC}: Netzspannung
- I_{AC}: Einspeisestrom

- t: Zeit
- t1, t2, t3: Zeitpunkt
- Δt: Zeitdauer

- S: Marker

## Patentansprüche

1. Nachführverfahren für einen Spannungswandler, insbesondere einen Wechselrichter, einer Photovoltaikanlage, zur Nachführung eines Arbeitspunkts eines PV-Generators (1),bei dem eine Zwischenkreisspannung (U_{ZW}) wiederholt um Spannungsschritte einer vorgegebenen Höhe (ΔU) in eine Richtung zu kleinerer oder zu größerer Spannung hin verändert wird, **dadurch gekennzeichnet, dass** eine mittlere Änderungsrate (|ΔU/At|) der Zwischenkreisspannung (U_{ZW}) in einem Teilzeitraum zwischen zwei Spannungsschritten durch eine maximale mittlere Änderungsrate begrenzt wird, wobei die maximale mittlere Änderungsrate abhängig von der Höhe der Zwischenkreisspannung (U_{ZW}) festgelegt wird.

2. Nachführverfahren nach Anspruch 1, bei dem die maximale mittlere Änderungsrate abhängig von der Höhe einer Spannungsdifferenz zwischen der Zwischenkreisspannung (U_{ZW}) und einer mindestens benötigten Zwischenkreisspannung (Uₘᵢₙ) festgelegt wird.

3. Nachführverfahren nach Anspruch 2, bei dem die maximale mittlere Änderungsratemit abnehmender Höhe der Spannungsdifferenz abnimmt.

4. Nachführverfahren nach Anspruch 3, bei dem die maximale mittlere Änderungsrate oberhalb einer festgelegten Zwischenkreisspannung (U_{ZW}) konstant ist.

5. Nachführverfahren nach einem der Ansprüche 2 bis 4, bei dem die mindestens benötigte Zwischenkreisspannung (Uₘᵢₙ) anhand einer Netzspannung (U_{AC}) ermittelt wird.

6. Nachführverfahren nach Anspruch 5, bei dem die mindestens benötigte Zwischenkreisspannung (Uₘᵢₙ) weiter anhand eines Einspeisestroms (I_{AC}) ermittelt wird.

7. Nachführverfahren nach einem der Ansprüche 2 bis 6, bei dem die mindestens benötigte Zwischenkreisspannung (Uₘᵢₙ) regelmäßig aktualisiert wird.

8. Nachführverfahren nach Anspruch 7, bei dem die Aktualisierung der mindestens benötigten Zwischenkreisspannung (Umin) um ein Vielfaches häufiger erfolgt als die Spannungsschritte.

9. Nachführverfahren nach einem der Ansprüche 1 bis 8, bei dem die Höhe der Spannungsschritte (ΔU) abhängig von der Höhe der Zwischenkreisspannung (U_{ZW}) festgelegt wird.

10. Nachführverfahren nach einem der Ansprüche 1 bis 9, bei dem ein Sollwert für die Zwischenkreisspannung (U_{ZW}) als eine stetige Funktion mit einer endlichen Änderungsrate vorgegeben wird.

11. Nachführverfahren nach Anspruch 10, bei dem Änderungen des Sollwertes rampenförmig vorgegebenen werden.

12. Nachführverfahren nach einem der Ansprüche 1 bis 11, bei dem die maximale mittlere Änderungsrate mittels einer Aktualisierungsrate einer Regelung eines vom Wechselrichter in ein Wechselspannungsnetz eingespeisten Stromes festgelegt wird.

13. Nachführeinrichtung (10) für einen Spannungswandler, **dadurch gekennzeichnet, dass** die Nachführeinrichtung (10) dazu eingerichtet ist, ein Verfahren gemäß einem der Ansprüche 1 bis 12 auszuführen.

14. Wechselrichter für eine Photovoltaikanlage aufweisend eine Nachführeinrichtung (10) gemäß Anspruch 13.

15. Wechselrichter nach Anspruch 14, der einstufig ausgeführt ist.

## Claims

1. A tracking method for a voltage converter, in particular an inverter, of a photovoltaic system, for tracking a working point of a PV generator (1), in which method an intermediate circuit voltage (U_{ZW}) is changed repeatedly by voltage increments of a predetermined level (ΔU) in a direction towards a lower or a higher voltage, **characterized in that** a mean rate of change (|ΔU/Δt|) of the intermediate circuit voltage (U_{ZW}) in a subperiod between two voltage increments is limited by a maximum mean rate of change, wherein the maximum mean rate of change is determined depending on the level of the intermediate circuit voltage (U_{ZW}).

2. The tracking method as claimed in claim 1, in which the maximum mean rate of change is determined depending on the level of a voltage difference between the intermediate circuit voltage (U_{ZW}) and a minimum required intermediate circuit voltage (Uₘᵢₙ).

3. The tracking method as claimed in claim 2, in which the maximum mean rate of change decreases as the level of the voltage difference decreases.

4. The tracking method as claimed in claim 3, in which the maximum mean rate of change is constant above a fixed intermediate circuit voltage (U_{ZW}).

5. The tracking method as claimed in one of claims 2 to 4, in which the minimum required intermediate circuit voltage (Uₘᵢₙ) is determined on the basis of a mains voltage (U_{AC}).

6. The tracking method as claimed in claim 5, in which the minimum required intermediate circuit voltage (Uₘᵢₙ) is further determined on the basis of a feed-in current (I_{AC}).

7. The tracking method as claimed in one of claims 2 to 6, in which the minimum required intermediate circuit voltage (Uₘᵢₙ) is updated regularly.

8. The tracking method as claimed in claim 7, in which the updating of the minimum required intermediate circuit voltage (Uₘᵢₙ) is performed more frequently than the voltage increments by a multiple.

9. The tracking method as claimed in one of claims 1 to 8, in which the level of the voltage increments (ΔU) is determined depending on the level of the intermediate circuit voltage (U_{ZW}).

10. The tracking method as claimed in one of claims 1 to 9, in which a setpoint value for the intermediate circuit voltage (U_{ZW}) is provided as a continuous function with a finite rate of change.

11. The tracking method as claimed in claim 10, in which changes in the setpoint value are provided with a ramp function.

12. The tracking method as claimed in one of claims 1 to 11, in which the maximum mean rate of change is determined by means of an update rate for a control of a current fed-in by the inverter into an AC voltage grid.

13. A tracking device (10) for a voltage converter, **characterized in that** the tracking device (10) is configured to implement a method as claimed in one of claims 1 to 12.

14. An inverter for a photovoltaic system comprising a tracking device (10) as claimed in claim 13.

15. The inverter as claimed in claim 14, which is configured as a single-stage inverter.

## Revendications

1. Procédé de suivi d'un convertisseur de tension d'une installation photovoltaïque, en particulier d'un onduleur, pour le suivi du point de travail d'un générateur PV (1), dans lequel une tension (U_{ZW}) de circuit intermédiaire est modifiée de manière répétée par des étapes de tension de niveau (ΔU) prédéfini dans la direction allant vers une tension plus basse ou une tension plus élevée,
**caractérisé en ce que**
un taux moyen de modification (|ΔU/Δt|) de la tension (U_{ZW}) du circuit intermédiaire est limité à un taux maximum moyen de modification dans un intervalle de temps partiel entre deux étapes de tension et
**en ce que** le taux maximum moyen de modification est défini en fonction du niveau de la tension (U_{ZW}) du circuit intermédiaire.

2. Procédé de suivi selon la revendication 1, dans lequel le taux maximum moyen de modification est défini en fonction du niveau de la différence de tension entre la tension (U_{ZW}) du circuit intermédiaire et une tension minimale nécessaire (Uₘᵢₙ) du circuit intermédiaire.

3. Procédé de suivi selon la revendication 2, dans lequel le taux maximum moyen de modification diminue lorsque le niveau de la différence de tension diminue.

4. Procédé de suivi selon la revendication 3, dans lequel le taux maximum moyen de modification est constant au-dessus d'une tension définie (U_{ZW}) du circuit intermédiaire.

5. Procédé de suivi selon l'une des revendications 2 à 4, dans lequel la tension minimale nécessaire (Uₘᵢₙ) du circuit intermédiaire est déterminée à l'aide de la tension (U_{AC}) du réseau.

6. Procédé de suivi selon la revendication 5, dans lequel la tension minimale nécessaire (Uₘᵢₙ) du circuit intermédiaire est en outre déterminée à l'aide d'un courant d'alimentation (I_{AC}).

7. Procédé de suivi selon l'une des revendications 2 à 6, dans lequel la tension minimale nécessaire (Uₘᵢₙ) du circuit intermédiaire est mise à jour régulièrement.

8. Procédé de suivi selon la revendication 7, dans lequel la mise à jour de la tension minimale nécessaire (Uₘᵢₙ) du circuit intermédiaire s'effectue à une fréquence qui est un multiple de celle des étapes de tension.

9. Procédé de suivi selon l'une des revendications 1 à 8, dans lequel le niveau des étapes de tension (ΔU) est défini en fonction de la tension (U_{ZW}) du circuit intermédiaire.

10. Procédé de suivi selon l'une des revendications 1 à 9, dans lequel une valeur de consigne de la tension (U_{ZW}) du circuit intermédiaire est prédéterminée comme fonction constante à taux de modification infini.

11. Procédé de suivi selon la revendication 10, dans lequel des modifications de la valeur de consigne sont prédéterminées en forme de rampe.

12. Procédé de suivi selon l'une des revendications 1 à 11, dans lequel le taux maximum moyen de modification est défini au moyen d'un taux de mise à jour de la régulation du courant injecté par le redresseur dans un réseau à tension alternative.

13. Dispositif (10) de suivi d'un convertisseur de tension, **caractérisé en ce que** le dispositif de suivi (10) est conçu pour exécuter un procédé selon l'une des revendications 1 à 12.

14. Onduleur pour installation photovoltaïque, présentant un dispositif de suivi (10) selon la revendication 13.

15. Onduleur selon la revendication 14, réalisé à un étage.
